# EUROPEAN PATENT SPECIFICATION

(11) **EP 3 539 797 B1**
(45) Date of publication and mention of the grant of the patent: **02.12.2020**
(21) Application number: 19161493.2
(22) Date of filing: 08.03.2019
(51) Int. Cl.: B60C 9/22, B60C 9/26, B60C 9/20

(54) **TIRE**
REIFEN
PNEUMATIQUE

(30) Priority: 12.03.2018 JP 2018044395
(43) Date of publication of application: 18.09.2019
(73) Proprietor: Sumitomo Rubber Industries Ltd., Kobe-shi, Hyogo 651-0072 (JP)
(72) Inventor: OTANI, Masafumi, Kobe-shi, Hyogo 651-0072 (JP)
(74) Representative: TBK

(56) References cited:
- EP-A- 0 403 420
- EP-A1- 0 482 898
- EP-A1- 0 628 435
- EP-A1- 3 225 427
- EP-A2- 0 309 134
- EP-A2- 0 333 628
- JP-A- H05 178 007

## Description

The present invention relates to a tire according to the preamble of claim 1.

### Background art

JP 2017-177842 A below describes a pneumatic tire including a tread reinforcing band. This band has a central part located in the center in the axial direction and having a spiral structure in which a rubberized cord strip is wound circumferentially of the tire.

As a result of various tests, it was found that the tire of JP 2017-177842 A has room for improvement concerning stability during braking. The inventors of the present invention have examined the pneumatic tire of JP 2017-177842 A and found that, during braking, the amount of deformation of the tread crown portion, in particular, in axial edge regions of the tread crown portion becomes larger, which makes the behavior of the tire during braking unstable.

EP 0 333 628 A2 shows a generic tire according to the preamble of claim 1, which comprises a toroidal carcass, and a tread reinforcing layer disposed radially outside the carcass in a tread portion, wherein the tread reinforcing layer comprises a cord-reinforced part in which a rubberized cord strip with at least one reinforcing cord covered with a topping rubber is wound, the cord-reinforced part comprises a spiral part in which the rubberized cord strip is wound spirally and circumferentially of the tire, the spiral part includes a first edge part and a second part continued from the first edge part, in the second part, the rubberized cord strip is wound spirally and circumferentially of the tire more than one turn, and in the first edge part, the rubberized cord strip extends in the tire circumferential direction at an angle with respect to the tire circumferential direction which angle is smaller than that in the second part, and overlaps the rubberized cord strip in the second part.

Further tires according to the prior art are shown in EP 0 482 898 A1, EP 0 403 420 A, JP H05-178007 A, EP 0 628 435 A1 and EP 0 309 134 A2.

### Summary of the Invention

It is the object of the present invention to further develop a tire according to the preamble of claim 1 such that the stability of the tire during braking is improved.

The object of the present invention is achieved by a tire having the features of claim 1.

Further developments of the present invention are defined in the dependent claims.

In general, a reinforcing layer formed by spirally winding a rubberized cord strip at a constant helical pitch, may have, at the winding start position or winding end position of the rubberized cord strip, a triangular portion without the rubberized cord strip (namely, not reinforced by the rubberized cord strip) which is formed between a tire circumferential direction line passing through the axially outermost position of the reinforcing layer and the adjacent edge of the rubberized cord strip. Therefore, an edge part of the reinforcing layer is reduced in the rigidity due to the un-reinforced triangular portion.

In contrast thereto, the tread reinforcing layer according to the present invention is provided with the first edge part configured as described above, therefore, the formation of the above-described un-reinforced portion is prevented. Thus, it is possible to suppress the reduction in the rigidity of the spiral part in its edge part. As a result, the deformation of the edge part of the spiral part during braking can be suppressed. Therefore, according to the present invention, the behavior of the tire during braking is stabilized.

Preferably, it is desirable that the first edge part extends in the tire circumferential direction over a range in the tire circumferential direction which is not less than 45 degrees and not more than 360 degrees in terms of an angle around the tire rotational axis.

It is further preferable that, in the second part, the rubberized cord strip extends in a spiral manner such that the adjacent side edges thereof overlap each other.

It is further preferable that the tread reinforcing layer further includes a second edge part continued from the second part, and in the second edge part, the rubberized cord strip extends in the tire circumferential direction at an angle with respect to the tire circumferential direction which angle is smaller than that in the second part, and overlaps the rubberized cord strip in the second part.

Preferably, it is desirable that, between the lateral part and the spiral part, a distance equal to or less than the width of the rubberized cord strip is formed.

### Brief description of the drawings

Fig. 1 is a cross-sectional view showing a tire as an embodiment of the present invention.
Fig. 2 is a perspective view showing a rubberized cord strip.
Fig. 3 is a developed view of a central part of a tread reinforcing layer in the present embodiment.

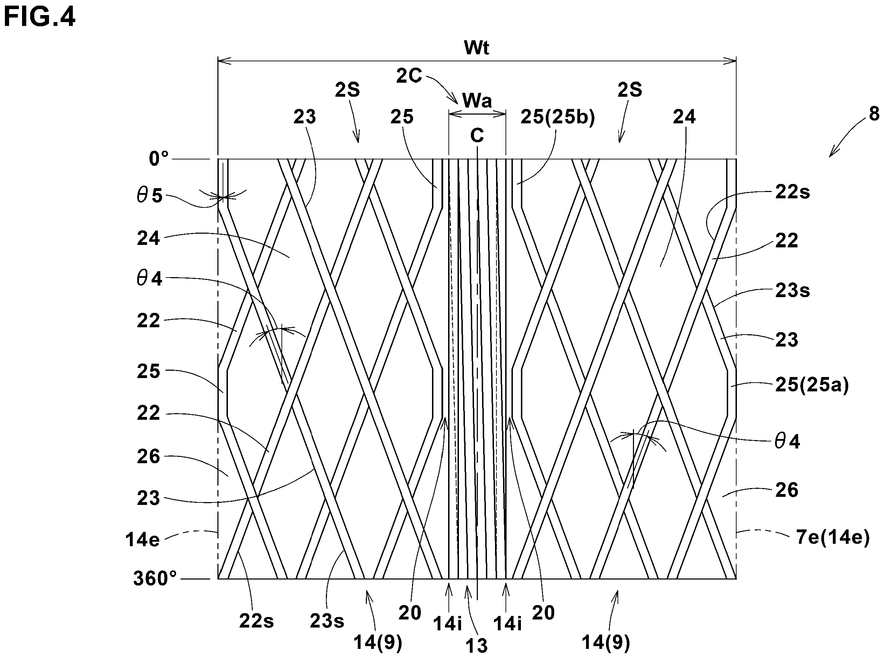

Fig. 4 is a developed view of the tread reinforcing layer showing the entire circumferential length thereof by reducing the scale only in the length direction.
Fig. 5 is a developed view of another example of the tread reinforcing layer.

### Description of Preferred embodiments

The present invention can be applied to pneumatic tires and non-pneumatic tires in various categories such as for passenger cars, motorcycles, heavy duty vehicles, etc.,
Taking a pneumatic tire for a motorcycle as an example, embodiments of the present invention will be described in conjunction with accompanying drawings.

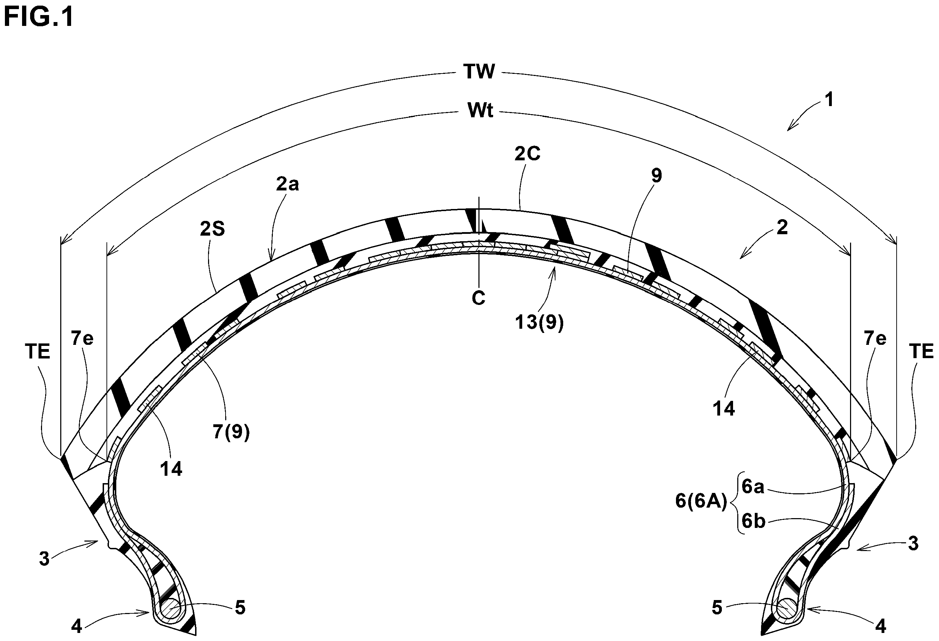

Fig. 1 shows a pneumatic tire 1 for a motorcycle as an embodiment of the present invention.

In Fig. 1, there is shown a tire meridian section including the tire rotational axis (not shown) of the tire 1 in its normally inflated unloaded condition.

The normally inflated unloaded condition is such that the tire is mounted on a standard wheel rim and inflate to a standard pressure but loaded with no tire load.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.
The standard pressure is the maximum air pressure for the tire specified by the same organization in the Air-pressure/Maximum-load Table or similar list.
For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at Various Cold Inflation Pressures" table in TRA or the like.

In this application including specification and claims, various dimensions, positions and the like of a pneumatic tire refer to those under a normally inflated unloaded condition of the tire unless otherwise noted.

As shown in Fig. 1, the tire 1 in the present embodiment comprises a tread portion 2 having a tread surface 2a contacting with the ground, a pair of sidewall portions 3, a pair of bead portions 4, a carcass 6 extending between the bead portions 4 through the tread portion 2 and sidewall portions 3, and a tread reinforcing layer 7 disposed radial outside the carcass 6 in the tread portion 2.

The tread portion 2 is curved in an arc shape protruding outwardly in the tire radial direction so that the maximum cross section width of the tire occurs between the tread edges TE and TE.

The tread portion 2 comprises a crown region 2C including the tire equator C, and a pair of shoulder regions 2S on both sides thereof. The shoulder regions 2S respectively range from the edges in the tire axial direction of the crown region 2C to the tread edges TE.

The carcass 6 is composed of at least one carcass ply 6A. The carcass ply 6A is formed from carcass cords rubberized with topping rubber and arranged at an angle of from 75 to 90 degrees with respect to the tire equator C.
The carcass ply 6A comprises, for example, a main portion 6a extending between the bead portions 4 through the tread portion 2 and the sidewall portions 3, and a pair of turned up portions 6b continued from the main portion 6a and turned up around bead cores 5 disposed in the respective bead portions 4.

In the tire meridian section, the tread reinforcing layer 7 curves along the tread portion 2 and extends over substantially the entire width of the tread portion 2. As a result, the tread reinforcing layer 7 increases the stiffness of the tread portion 2 over the entire tread portion 2.
From such a viewpoint, it is desirable that the width Wt of the tread reinforcing layer 7 measured along the tread surface 2a is set in a range from 75% to 95% of the developed tread width TW measured between the tread edges TE along the tread surface 2a.

The tread reinforcing layer 7 comprises a cord-reinforced part 8 formed by winding a rubberized cord strip 9 around the carcass 6.

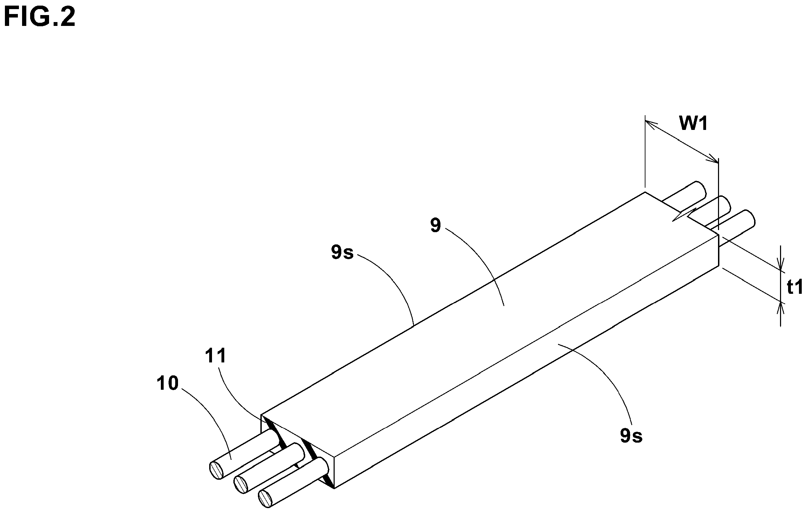

An example of such rubberized cord strip 9 is shown in Fig. 2. The rubberized cord strip 9 is a strip or tape of a topping rubber 11 in which at least one reinforcing cord 10 is embedded along the length thereof. In this example, a plurality of parallel reinforcing cords 10 are embedded as shown in Fig. 2.

For the reinforcing cords 10, steel cords and organic fiber cords can be used.

The rubberized cord strip 9 in this example has a substantially rectangular cross-sectional shape, and has side edges 9s extending in the longitudinal direction.

It is desirable that the width W1 of the rubberized cord strip 9 is, for example, set in a range from 2.5 to 12.0 mm.

It is desirable that the thickness t1 of the rubberized cord strip 9 is, for example, set in a range from 0.6 to 3.0 mm.

The reinforcing cords 10 are arranged side-by-side in the widthwise direction and extend in parallel with the side edges 9s.

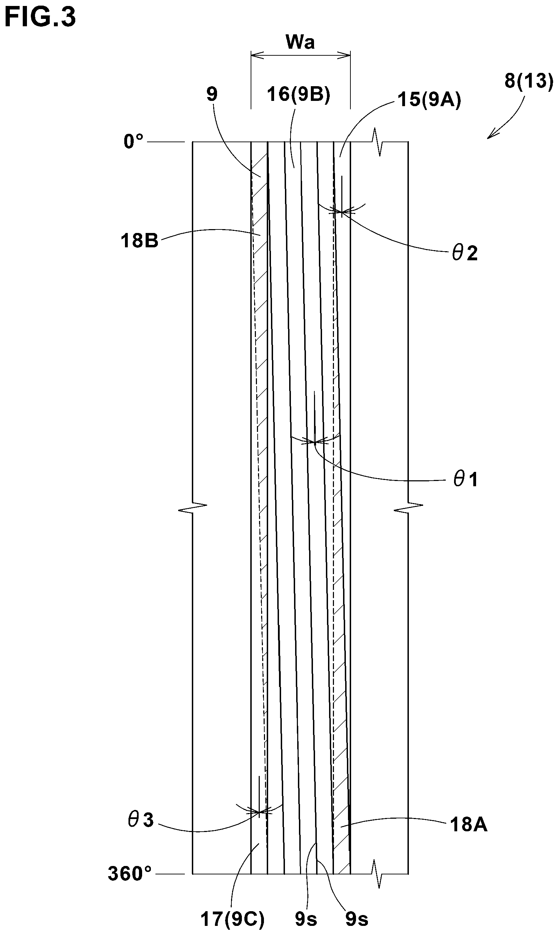

Fig. 3 shows a central part of the cord-reinforced part 8 developed in the tire circumferential direction by reducing the scale only in the tire circumferential direction. In Fig. 3, therefore, the vertical length of the cord-reinforced part 8 corresponds to its entire circumferential length.

As shown, the cord-reinforced part 8 includes a spiral part 13 in which the rubberized cord strip 9 extends spirally in the tire circumferential direction. Such spiral part 13 can exert a large hooping force to suppress the deformation of the tread portion 2 inclusive of the carcass 6 therein.

The spiral part 13 includes a first edge part 15 (right side in the figure), and a second part 16 continued therefrom.

The first edge part 15 and the second part 16 are formed from the one rubberized cord strip 9. That is, the rubberized cord strip 9A in the first edge part 15 is continued to the rubberized cord strip 9B in the second part 16. Thereby, the above-described action is effectively exhibited.

In the second part 16, the rubberized cord strip 9B is wound spirally more than one turn in the tread portion 2.

Such second part 16 increases the stiffness of the tread portion 2 and improves the stability during braking.

The rubberized cord strip 9B in the second part 16 is inclined, for example, at an angle θ1 of not less than 1 degree and not more than 5 degrees with respect to the tire circumferential direction. Thereby, the above-described function is effectively exerted.

In this example, the rubberized cord strip 9B in the second part 16 is wound spirally so that the axially adjacent side edges 9s thereof come in contact with each other.

In such second part 16, the variation in the mass distribution of the cord-reinforced part 8 is reduced to improve the tire uniformity.

In the second part 16, it is also possible that the adjacent side edges 9s of the rubberized cord strip 9B are overlapped each other (not shown). Such second part 16 can further increase the binding force in the tread portion 2.

In the first edge part 15, the rubberized cord strip 9A
extends in the tire circumferential direction at an angle θ2 with respect to the tire circumferential direction which angle is smaller than the angle θ1 of the rubberized cord strip 9B in the second part 16, and overlaps the rubberized cord strip 9B in the second part 16.

As a result, an un-reinforced triangular portion (not shown) without the rubberized cord strip is eliminated, and lowering of the stiffness of the spiral part 13 in its edge portion can be suppressed. Therefore, in the tire 1 in the present embodiment, the deformation during braking, of the edge portion in the tire axial direction of the spiral part 13 can be suppressed, and it is thus possible to stabilize the behavior of the tire 1 during braking.

Although not particularly limited, the angle θ2 of the rubberized cord strip 9A in the first edge part 15 is preferably 2 degrees or less, more preferably 0 degree.

It is preferable that the first edge part 15 extends over a range in the tire circumferential direction which is not less than 45 degrees but not more than 360 degrees in terms of an angle around the tire rotational axis.

Such first edge part 15 can effectively reduce the above-mentioned un-reinforced part, and the behavior of the tire during braking can be further stabilized.

If the range is more than 360 degrees, there is a possibility that the change in the mass of the tire between the first edge part 15 side and the second part 16 side becomes larger.

If the range is less than 45 degrees, the un-reinforced parts may not be effectively reduced.

From this point of view, it is more preferable that the range is not less than 90 degrees, more preferably not less than 180 degrees. In the present embodiment, the first edge part 15 extends over 360 degrees around the tire rotational axis.

In the present embodiment, the spiral part 13 includes a second edge part 17 (left side in the figure) continued from the second part 16. In the second edge part 17, the rubberized cord strip 9 extends in the tire circumferential direction at an angle θ3 with respect to the tire circumferential direction which angle is smaller than the angle θ1 of the rubberized cord strip 9B in the second part 16, and overlaps the rubberized cord strip 9B in the second part 16.
Also, such second edge part 17 can reduce the un-reinforced portion and suppress the lowering of the stiffness of the spiral part 13 in the edge portion in the tire axial direction.

The angle θ3 of the rubberized cord strip 9C in the second edge part 17 is preferably set to be not more than 2 degrees, more preferably 0 degree.
In the present embodiment, the angle θ3 in the second edge part 17 is the same as the angle θ2 in the first edge part 15.

It is preferable that the second edge part 17 extends over a range in the tire circumferential direction which range is not less than 45 degrees but not more than 360 degrees in terms of an angle around the tire rotational axis.
Such second edge part 17 can effectively reduce the above-mentioned un-reinforced part.

Such range is more preferably not less than 90 degrees, still more preferably not less than 180 degrees.

In the present embodiment, the second edge part 17 extends over 360 degrees around the tire rotational axis.

In the present embodiment, the second edge part 17 and the second part 16 are formed from the one continuous rubberized cord strip 9. That is, the rubberized cord strip 9C in the second edge part 17 is continued from the rubberized cord strip 9B in the second part 16.

In the present embodiment, the spiral part 13 is formed in a rectangular shape as shown in the develop view (Fig. 3) by the first edge part 15, the second part 16 and the second edge part 17. As a result, deformation in both of the edge portions in the tire axial direction can be effectively suppressed, and the stability during braking is further improved.

In the present embodiment, a first overlap portion 18A in which the first edge part 15 and the second part 16 overlap in the tire axial direction, and a second overlap portion in which the second edge part 17 and the second part 16 overlap in the tire axial direction 18B are formed so as to be point symmetric about a point at the center of the spiral part 13.

Thereby, deterioration of the uniformity of the spiral part 13 is suppressed, and the stability during braking can be maintained at high levels.
In the present embodiment, the first overlap portion 18A and the second overlap portion 18B are each formed in a triangular shape as indicated in Fig. 3 with hatching.

The cord-reinforced part 8 further comprises a pair of lateral parts 14 disposed on both sides in the tire axial direction of the spiral part 13.
In each of the lateral parts 14, the rubberized cord strip 9 is inclined at an angle θ4 with respect to the tire circumferential direction which is larger than the angle θ1 of the rubberized cord strip 9B in the second part 16.

In the present embodiment, the spiral part 13 is disposed in the crown region 2C including the tire equator C.
The widthwise center in the tire axial direction of the spiral part 13 is located at the tire equator C.

In the present embodiment, the lateral parts 14 are disposed in the respective shoulder regions 2S axially outside the crown region 2C.

Preferably, the maximum width Wa of the spiral part 13 measured along the tread surface 2a of the tread portion 2 is set in a range from 5% to 15% of the developed tread width TW.

If the maximum width Wa of the spiral part 13 is less than 5% of the developed tread width TW, the spiral part 13 can not extend over a central part of the tread portion which part contacts with the ground during straight running and subjected to a large braking force, therefore, there is a possibility that the behavior of the tire 1 during braking becomes unstable.

If the maximum width Wa of the spiral part 13 exceeds 15% of the developed tread width TW, the spiral part 13 is also disposed in each lateral part of the tread portion which part contacts with the ground only during turning, therefore, the mass of the tire 1 becomes increased, and as a result, the behavior of the tire during breaking becomes unstable.
In the spiral part 13 in the present embodiment, the rubberized cord strip 9 is wound circumferentially of the tire three or more turns.

In the present embodiment, a gap 20 of not more than the width W1 of the rubberized cord strip 9 is formed between each of the lateral parts 14 and the spiral part 13.

Such gaps 20 can prevent a large lateral force acting on the lateral part 14 during cornering from acting on the spiral part 13. In addition, the gap 20 having such dimension helps to maintain the rigidity of the cord-reinforced part 8 at high levels. It is however, also possible to omit such gap 20 between the lateral part 14 and the spiral part 13 in order to increase the rigidity of the cord-reinforced part 8.

In each of the lateral parts 14, the rubberized cord strip 9 comprises a plurality of first inclined segments 22 and a plurality of second inclined segments 23.

In the first inclined segments 22, the rubberized cord strip 9 is inclined toward one side (diagonally right up in the figure) with respect to the tire circumferential direction.

In the second inclined segments 23, the rubberized cord strip 9 is inclined to the opposite direction to the first inclined segments 22 (diagonally right down in the figure) with respect to the tire circumferential direction.

In the lateral parts 14, the side edges 22s of the first inclined segments 22 are arranged without coming into contact with each other, and also the side edges 23s of the second inclined segments 23 are arranged without coming into contact with each other. Thereby, the first inclined segments 22 intersect with the second inclined segments 23, leaving space parts 24, and form a mesh structure. Since the lateral part 14 formed in such a mesh structure has high torsional rigidity, it is possible to stabilize the behavior of the tire 1 during cornering.

In the present embodiment, the space parts 24 surrounded by the adjacent first inclined segments 22 and the adjacent second inclined segments 23 are formed in rhombic shapes.

In the lateral part 14, through the intersecting rubberized cord strip 9, the tension acting on a part of the lateral part 14 can be distributed over the whole of the lateral part 14. As a result, a reduction in the stiffness of the tread portion 2 can be suppressed .

Preferably, the angles θ4 of the first and second inclined segments 22 and 23 are set in a range from 3 to 15 degrees, more preferably from 4 to 12 degrees with respect to the tire circumferential direction. This makes it possible to further stabilize the behavior of the tire 1 during cornering.

In the present embodiment, the first inclined segments 22 and the second inclined segments 23 are connected to circumferential segments 25 extending parallel with the tire circumferential direction. Such circumferential segments 25 reduce bending stress of the rubberized cord strip 9, as compared with the case where the first inclined segments 22 and the second inclined segments 23 are directly connected, and suppress a reduction in the stiffness of the lateral part 14.

In the present embodiment, the circumferential segments 25 are disposed at the outer edge 14e and the inner edge 14i in the tire axial direction of each lateral part 14.

In the present embodiment, the circumferential segments 25a arranged at the outer edges 14e form the outer edges 7e in the tire axial direction of the tread reinforcing layer 7.

The circumferential segments 25a are disposed in a ground contacting region occurring when fully leaning the motorcycle. During cornering under such fully leaning condition, the circumferential segments 25a cause a small cornering power and increases the ground contact, therefore, the behavior of the tire 1 can be stabilized.

On the other hand, the circumferential segments 25b disposed at the inner edges 14i can stabilize the behavior of the tire 1 at the time of braking made mostly during straight running.

The angle θ5 of the circumferential segments 25 with respect to the tire circumferential direction is smaller than the above-mentioned angle θ4, and the angle θ5 is preferably not more than 5 degrees, more preferably not more than 3 degrees, most preferably 0 degree.

In the present embodiment, the circumferentially-adjacent circumferential segments 25 at each edge 14e, 14i are spaced apart from each other in the tire circumferential direction. In other words, at each edge 14e, 14i of each lateral part 14, the circumferential segments 25 alternate with gap portions 26 where the rubberized cord strip 9 is not disposed. As a result, an increase in the mass of the tire 1 is suppressed, while stabilizing the behavior of the tire 1.

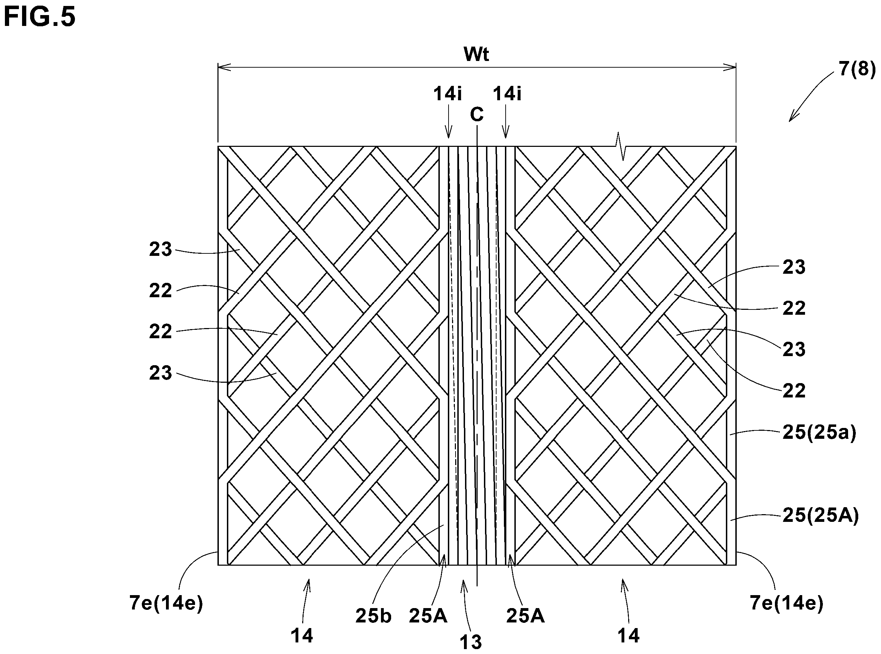

It is however, also possible to omit the gap portions 26 where the rubberized cord strip 9 is not disposed as shown in Fig. 5.

In the example shown in Fig. 5 of the tread reinforcing layer 7, at each of the inner edge 14i and the outer edge 14i of each lateral part 14, the circumferential segments 25 which connect between the first inclined segments 22 and the second inclined segments 23, are arranged without spacing so as to continue in the tire circumferential direction like a circumferentially-continuous single rubberized cord strip 25A.

This further improves the stability at the time of braking during straight running.

While detailed description has been made of preferable embodiments of the present invention, the present invention can be embodied in various forms without being limited to the illustrated embodiments and within the scope of the appended claims.

### Comparison Test

Motorcycle tires having the internal structure shown in Fig. 1 were experimentally manufactured as test tires (Practical examples Ex1-Ex8 and Comparative example Ref) and tested for the stability during braking.

The test tires had the specifications shown in Table 1, and their common specifications are as follows.
rubberized cord strip: width=4.0 mm, thickness=1.0 mm
tread reinforcing layer: width Wt=80% of TW
spiral part: width Wa=10% of TW

### < Stability during braking >

The test tires were mounted on front and rear wheels of a 1300 cc motorcycle. The motorcycle was run on a dry asphalt road in a test course, and the test rider evaluated the stability at the time of braking during straight running and also during cornering.

The results are indicated in Table 1 by an index based on Ref being 100, wherein the larger value is better.

Front wheel:
tire size 120/70ZR17,
rim size 17M/CxMT3.50,
tire pressure 250 kPa

Rear wheel:
tire size 190/55ZR17,
rim size 17M/CxMT5.50,
tire pressure 290 kPa

**Table 1**

| tire | Ref | Ex1 | Ex2 | Ex3 | Ex4 | Ex5 | Ex6 | Ex7 | Ex8 |
|---|---|---|---|---|---|---|---|---|---|
| tread reinforcing layer (Fig. No.) | 4 | 4 | 4 | 4 | 4 | 4 | 4 | 4 | 5 |
| angular range of first edge part 15 (deg.) | 0 | 40 | 45 | 90 | 180 | 360 | 360 | 360 | 360 |
| angular range of second edge part 17 (deg.) | 0 | 40 | 45 | 90 | 180 | 360 | 0 | 360 | 360 |
| gap 20 (mm) | 2.0 | 2.0 | 2.0 | 2.0 | 2.0 | 2.0 | 2.0 | 4.0 | 2.0 |
| stability | 100 | 104 | 105 | 107 | 108 | 110 | 105 | 104 | 112 |

It was confirmed from the test results that, as compared with the comparative example, the tires according to the present invention exhibited excellent stability during braking.

### Description of the reference numerals

- 1: tire
- 2: tread portion
- 7: tread reinforcing layer
- 8: cord-reinforced part
- 9: rubberized cord strip
- 13: spiral part
- 15: first edge part
- 16: second part

## Claims

1. A tire (1) comprising:
a toroidal carcass (6), and
a tread reinforcing layer (7) disposed radially outside the carcass (6) in a tread portion (2), wherein
the tread reinforcing layer (7) comprises a cord-reinforced part (8) in which a rubberized cord strip (9, 9A, 9B) with at least one reinforcing cord (10) covered with a topping rubber (11) is wound,
the cord-reinforced part (8) comprises a spiral part (13) in which the rubberized cord strip (9, 9A, 9B) is wound spirally and circumferentially of the tire (1),
the spiral part (13) includes a first edge part (15) and a second part (16) continued from the first edge part (15),
in the second part (16), the rubberized cord strip (9B) is wound spirally and circumferentially of the tire (1) more than one turn, and
in the first edge part (15), the rubberized cord strip (9A) extends in the tire circumferential direction at an angle (θ2) with respect to the tire circumferential direction which angle (θ2) is smaller than that (θ1) in the second part (16), and overlaps the rubberized cord strip (9B) in the second part (16),
**characterized in that**
the cord-reinforced part (8) includes, on each side in the tire axial direction of the spiral part (13), a lateral part (14) in which the rubberized cord strip (9, 9A, 9B) is inclined at an angle (θ4) with respect to the tire circumferential direction which is larger than the angle (θ1) of the rubberized cord strip (9B) in the second part (16),
in each of the lateral parts (14), the rubberized cord strip (9, 9A, 9B) comprises a plurality of first inclined segments (22) and a plurality of second inclined segments (23),
the first inclined segments (22) are inclined to one direction with respect to the tire circumferential direction,
the second inclined segments (23) are inclined to the opposite direction to the first inclined segments (22) with respect to the tire circumferential direction,
side edges (22s) of the first inclined segments (22) are arranged without coming into contact with each other,
side edges (23s) of the second inclined segments (23) are arranged without coming into contact with each other, and
the first inclined segments (22) intersect with the second inclined segments (23), leaving space parts (24) to form a mesh structure.

2. The tire (1) according to claim 1, wherein
the first edge part (15) extends in the tire circumferential direction over a range in the tire circumferential direction which is not less than 45 degrees and not more than 360 degrees in terms of an angle around the tire rotational axis.

3. The tire (1) according to claim 1, wherein
in the second part (16), the rubberized cord strip (9B) extends in a spiral manner such that the adjacent side edges (9s) thereof overlap each other.

4. The tire (1) according to claim 2, wherein
in the second part (16), the rubberized cord strip (9B) extends in a spiral manner such that the adjacent side edges (9s) thereof overlap each other.

5. The tire (1) according to any one of claims 1 to 4, wherein
the tread reinforcing layer (7) further includes a second edge part (17) continued from the second part (16), and
in the second edge part (17), the rubberized cord strip (9B) extends in the tire circumferential direction at an angle (θ3) with respect to the tire circumferential direction which angle (θ3) is smaller than that (θ1) in the second part (16), and overlaps the rubberized cord strip (9B) in the second part (16).

6. The tire (1) according to any one of claims 1 to 5, wherein,
between the lateral part (14) and the spiral part (13), a distance equal to or less than the width of the rubberized cord strip (9, 9A, 9B) is formed.

## Patentansprüche

1. Reifen (1), der Folgendes aufweist:
eine toroidalen Karkasse (6), und
eine Laufflächenverstärkungsschicht (7), die radial außerhalb der Karkasse (6) in einem Laufflächenabschnitt (2) angeordnet ist, wobei
die Laufflächenverstärkungsschicht (7) einen kordverstärkten Teil (8) aufweist, in dem ein gummierter Kordstreifen (9, 9A, 9B) mit zumindest einem Verstärkungskord (10), der mit einem Deckgummi (11) abgedeckt ist, gewickelt ist,
der kordverstärkte Teil (8) einen spiralförmigen Teil (13) aufweist, in dem der gummierte Kordstreifen (9, 9A, 9B) spiralförmig und in Umfangsrichtung des Reifens (1) gewickelt ist,
der spiralförmige Teil (13) einen ersten Randteil (15) und einen zweiten Teil (16) aufweist, der sich von dem ersten Randteil (15) fortsetzt,
in dem zweiten Teil (16) der gummierte Kordstreifen (9B) spiralförmig und in Umfangsrichtung des Reifens (1) mehr als eine Windung gewickelt ist, und
sich in dem ersten Randteil (15) der gummierte Kordstreifen (9A) in der Reifenumfangsrichtung unter einem Winkel (θ2) in Bezug auf die Reifenumfangsrichtung erstreckt, wobei der Winkel (θ2) kleiner ist als der (θ1) in dem zweiten Teil (16), und den gummierten Kordstreifen (9B) in dem zweiten Teil (16) überlappt,
**dadurch gekennzeichnet, dass**
der kordverstärkte Teil (8) auf jeder Seite in der Reifenaxialrichtung des Spiralteils (13) einen lateralen Teil (14) aufweist, in dem der gummierte Kordstreifen (9, 9A, 9B) unter einem Winkel (θ4) in Bezug auf die Reifenumfangsrichtung geneigt ist, der größer ist als der Winkel (θ1) des gummierten Kordstreifens (9B) in dem zweiten Teil (16),
in jedem der lateralen Teile (14) der gummierte Kordstreifen (9, 9A, 9B) eine Vielzahl von ersten geneigten Segmenten (22) und eine Vielzahl von zweiten geneigten Segmenten (23) aufweist,
die ersten geneigten Segmente (22) in Bezug auf die Reifenumfangsrichtung in eine Richtung geneigt sind,
die zweiten geneigten Segmente (23) in Bezug auf die Reifenumfangsrichtung in die entgegengesetzte Richtung zu den ersten geneigten Segmenten (22) geneigt sind,
Seitenränder (22s) der ersten geneigten Segmente (22) angeordnet sind, ohne miteinander in Kontakt zu kommen,
Seitenränder (23s) der zweiten geneigten Segmente (23) angeordnet sind, ohne miteinander in Kontakt zu kommen, und
sich die ersten geneigten Segmente (22) mit den zweiten geneigten Segmenten (23) schneiden, wobei Raumteile (24) frei bleiben, um eine Netzstruktur auszubilden.

2. Reifen (1) nach Anspruch 1, wobei
sich der erste Randteil (15) in der Reifenumfangsrichtung über einen Bereich in der Reifenumfangsrichtung erstreckt, der nicht kleiner als 45 Grad und nicht größer als 360 Grad in Bezug auf einen Winkel um die Reifendrehachse beträgt.

3. Reifen (1) nach Anspruch 1, wobei
sich in dem zweiten Teil (16) der gummierte Kordstreifen (9B) spiralförmig erstreckt, so dass seine benachbarten Seitenränder (9s) einander überlappen.

4. Reifen (1) nach Anspruch 2, wobei
sich in dem zweiten Teil (16) der gummierte Kordstreifen (9B) spiralförmig erstreckt, so dass seine benachbarten Seitenränder (9s) einander überlappen.

5. Reifen (1) nach einem der Ansprüche 1 bis 4, wobei
die Laufflächenverstärkungsschicht (7) des Weiteren einen zweiten Randteil (17) aufweist, der sich von dem zweiten Teil (16) fortsetzt, und
sich in dem zweiten Randteil (17) der gummierte Kordstreifen (9B) in der Reifenumfangsrichtung unter einem Winkel (θ3) in Bezug auf die Reifenumfangsrichtung erstreckt, wobei der Winkel (θ3) kleiner ist als der (θ1) in dem zweiten Teil (16), und den gummierten Kordstreifen (9B) in dem zweiten Teil (16) überlappt.

6. Reifen (1) nach einem der Ansprüche 1 bis 5, wobei
zwischen dem lateralen Teil (14) und dem spiralförmigen Teil (13) ein Abstand ausgebildet ist, der gleich oder kleiner als die Breite des gummierten Kordstreifens (9, 9A, 9B) ist.

## Revendications

1. Pneu (1) comprenant :
une carcasse toroïdale (6), et
une couche de renforcement de bande de roulement (7) disposée radialement à l'extérieur de la carcasse (6) dans une partie de bande de roulement (2), dans lequel :
la couche de renforcement de bande de roulement (7) comprend une partie renforcée en corde (8) dans laquelle une bande de corde caoutchoutée (9, 9A, 9B) avec au moins une corde de renforcement (10) recouverte avec un caoutchouc de gommage (11) est enroulée,
la partie renforcée en corde (8) comprend une partie en spirale (13) dans laquelle la bande de corde caoutchoutée (9, 9A, 9B) est enroulée en spirale et de manière circonférentielle par rapport au pneu (1),
la partie en spirale (13) comprend une première partie de bord (15) et une seconde partie (16) continue à partir de la première partie de bord (15),
dans la seconde partie (16), la bande de corde caoutchoutée (9B) est enroulée en spirale et de manière circonférentielle par rapport au pneu (1) sur plus d'un tour, et
dans la première partie de bord (15), la bande de corde caoutchoutée (9A) s'étend dans la direction circonférentielle du pneu à un angle (θ2) par rapport à la direction circonférentielle du pneu, lequel angle (θ2) est inférieur à celui (θ1) dans la seconde partie (16), et recouvre la bande de corde caoutchoutée (9B) dans la seconde partie (16),
**caractérisé en ce que** :
la partie renforcée en corde (8) comprend, sur un côté de la direction axiale du pneu de la partie en spirale (13), une partie latérale (14) dans laquelle la bande en corde caoutchoutée (9, 9A, 9B) est inclinée à un angle (θ4) par rapport à la direction circonférentielle du pneu qui est supérieur à l'angle (θ1) de la bande de corde caoutchoutée (9B) dans la seconde partie (16),
dans chacune des parties latérales (14), la bande de corde caoutchoutée (9, 9A, 9B) comprend une pluralité de premiers segments inclinés (22) et une pluralité de seconds segments inclinés (23),
les premiers segments inclinés (22) sont inclinés dans une première direction par rapport à la direction circonférentielle du pneu,
les seconds segments inclinés (23) sont inclinés dans la direction opposée aux premiers segments inclinés (22) par rapport à la direction circonférentielle du pneu,
les bords latéraux (22s) des premiers segments inclinés (22) sont agencés sans venir en contact entre eux,
les bords latéraux (23s) des seconds segments inclinés (23) sont agencés sans venir en contact entre eux, et
les premiers segments inclinés (22) coupent les seconds segments inclinés (23) laissant des parties d'espace (24) pour former une structure en maille.

2. Pneu (1) selon la revendication 1, dans lequel :
la première partie de bord (15) s'étend dans la direction circonférentielle du pneu sur une plage dans la direction circonférentielle du pneu qui n'est pas inférieure à 45 degrés et non supérieure à 360 degrés en terme d'angle autour de l'axe de rotation du pneu.

3. Pneu (1) selon la revendication 1, dans lequel :
dans la seconde partie (16), la bande de corde caoutchoutée (9B) s'étend d'une manière en spirale de sorte que ses bords latéraux (9s) adjacents se chevauchent.

4. Pneu (1) selon la revendication 2, dans lequel :
dans la seconde partie (16), la bande de corde caoutchoutée (9B) s'étend d'une manière en spirale de sorte que ses bords latéraux (9s) adjacents se chevauchent.

5. Pneu (1) selon l'une quelconque des revendications 1 à 4, dans lequel :
la couche de renforcement de bande de roulement (7) comprend en outre une seconde partie de bord (17) continue à partir de la seconde partie (16), et
dans la seconde partie de bord (17), la bande de corde caoutchoutée (9B) s'étend dans la direction circonférentielle du pneu à un angle (θ3) par rapport à la direction circonférentielle du pneu, lequel angle (θ3) est inférieur à celui (θ1) dans la seconde partie (16), et recouvre la bande de corde caoutchoutée (9B) dans la seconde partie (16).

6. Pneu (1) selon l'une quelconque des revendications 1 à 5, dans lequel :
entre la partie latérale (14) et la partie en spirale (13), une distance égale ou inférieure à la largeur de la bande de corde caoutchoutée (9, 9A, 9B) est formée.
